# EUROPÄISCHE PATENTSCHRIFT

(11) **EP 3 538 590 B1**
(45) Veröffentlichungstag und Bekanntmachung des Hinweises auf die Patenterteilung: **26.02.2020**
(21) Anmeldenummer: 16794322.4
(22) Anmeldetag: 10.11.2016
(51) Int. Cl.: C08G 77/06, C08G 77/16

(54) **VERFAHREN ZUR HERSTELLUNG VON SIOH-FUNKTIONELLEN POLYSILOXANEN**
METHOD FOR PRODUCING SIOH-FUNCTIONAL POLYSILOXANES
PROCÉDÉ DE PRODUCTION DE POLYSILOXANES À FONCTION SIOH

(43) Veröffentlichungstag der Anmeldung: 18.09.2019
(73) Patentinhaber: Wacker Chemie AG, 81737 München (DE)
(72) Erfinder: LOESSEL, Georg, 84547 Emmerting (DE); MEISENBERGER, Manfred, 5122 Hochburg (AT)
(74) Vertreter: Fritz, Helmut
(86) Internationale Anmeldenummer: PCT/EP2016/077221
(87) Internationale Veröffentlichungsnummer: WO 2018/086690

(56) Entgegenhaltungen:
- DE-A1- 19 800 023

## Beschreibung

Die Erfindung betrifft ein kontinuierliches Verfahren zur Herstellung von SiOH-funktionellen Polysiloxanen mit niedrigem Molekulargewicht.

DE 102013212980 beschreibt, dass SiOH-funktionelle Polyphenylsiloxane mittels einem kontinuierlichen Verfahren herstellbar sind, wobei unter anderem die Chlorsilane in einem Gewichtsanteil von 95% bis 60% und die Alkoxysilane in einem Gewichtsanteil von 5% bis 40% bezogen auf die Summe aus Chlorsilanen und Alkoxysilanen parallel mit Wasser und einem nicht polaren Lösemittel der Reaktionsapparatur zudosiert werden.

Die langjährige technische Erfahrung im Umgang mit diesen Polysiloxanharzen zeigt, dass hohe Molekulargewichte Mw > 3000g/mol, für oberflächensensible Beschichtungsanwendungen nicht geeignet sind. Hier werden vorzugsweise Produkte mit Molekulargewichten < 3000 g/mol verarbeitet.

Allerdings treten beim Verfahren der DE 102013212980 besonders bei der Herstellung von Polymethylsiloxan enthaltenden Polyphenylsiloxanen Probleme mit nicht gewünschten hohen Molekulargewichten Mw > 3000 g/mol auf.

DE19800023 A1 offenbart ein kontinuierliches Verfahren zur Herstellung von Polyorganosiloxanen durch mehrstufige Hydrolyse und Kondensation von Alkoxysilanen eventuell in Gegenwart von 0,5-20 Gew% Chlorsilanen und einem mit Wasser nicht mischbaren Lösemittel.

Gegenstand der Erfindung ist ein kontinuierliches Verfahren zur Herstellung von Organopolysiloxanen mit einem OH-Gehalt von 3,0 - 10,0 Gew.-%, bei dem Alkoxysilane in einem Gewichtsanteil von mindestens 60% und Chlorsilane in einem Gewichtsanteil von höchstens 40% bezogen auf die Summe aus Chlorsilanen und Alkoxysilanen, Wasser und unpolares nicht mehr als 1 g in 1 l Wasser bei 20°C und 1 bar lösliches Lösemittel kontinuierlich zum Reaktionsgemisch zudosiert werden und Reaktionsgemisch kontinuierlich abgeführt wird.

Durch den erhöhten Einsatz der Alkoxysilane im Verhältnis zu den Chlorsilanen läuft die kontinuierliche Umsetzung gleichmäßiger ab und es werden Organopolysiloxane mit einheitlicheren und niedrigeren Molekulargewichten, insbesondere Molekulargewichte Mw < 3000g/mol erhalten.

Im Gegensatz zu den bekannten Verfahren können die Organopolysiloxane mit einem OH-Gehalt von 3,0 - 10,0 Gew.-%, durch das erfindungsgemäße Verfahren auch unter Verzicht wasserlöslicher polarer Lösemittel einschließlich Alkohole mit sehr kurzen Verweilzeiten hergestellt werden. Durch die niedrigen Verweilzeiten sowie geringere Mengen an Alkoxysilanen wird die Bildung von Alkanchloriden aus Alkohol und HCl unterdrückt, die Menge an Alkohol reduziert.
Dies führt auch zu entscheidenden Kostenvorteilen gegenüber den bekannten kontinuierlichen und diskontinuierlichen Verfahren, da neben der größeren Durchsatzleistung durch geringe Verweilzeiten gleichzeitig der Aufwand der Abwasserbehandlung durch geringere Belastungen an CSB und POX deutlich reduziert werden kann.

Es bilden sich eine Wasserphase und eine Lösemittelphase aus; diese werden innig vermischt. Vorzugsweise wird Wasser in solchen Mengen zudosiert, dass sich eine HCl-Konzentration in der Wasserphase von 5 - 35 Gew.-% einstellt.

Vorzugsweise werden die Alkoxysilane in einem Gewichtsanteil von 63% bis 75%, insbesondere 65% bis 70%, und die Chlorsilane in einem Gewichtsanteil von 37 % bis 25%, insbesondere 35 % bis 30%, jeweils bezogen auf die Summe aus Chlorsilanen und Alkoxysilanen zudosiert.

Das unpolare Lösemittel ist vorzugsweise zu nicht mehr als 0,5 g in 1 l Wasser bei 20°C und 1 bar löslich. Beispiele für unpolare Lösemittel sind Kohlenwasserstoffe, wie Pentan, n-Hexan, Hexan-Isomerengemische, Heptan, Oktan, Waschbenzin, Petrolether, Benzol, Toluol, Xylole. Besonders bevorzugt sind Toluol und Xylole.

Polare Lösemittel, die nicht zudosiert werden, sind insbesondere Alkohole, wie Methanol und Ethanol: Ether, wie Dioxan, Tetrahydrofuran, Diethylether, Di-isopropylether, Diethylenglycoldimethylether; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel.

Vorzugsweise wird das unpolare Lösemittel dem Reaktionsgemisch in solchen Mengen zugeführt, dass sich Festgehalte von 25-45 Gew.-% einstellen. Der Festgehalt ist die Menge an gebildeten Organopolysiloxanen, die in der Lösemittelphase gelöst sind.

Vorzugsweise wird das in der Lösemittelphase gelöste Organopolysiloxan kontinuierlich von der Wasserphase getrennt. Vorzugsweise wird das Organopolysiloxan destillativ vom Lösemittel befreit.

Chlorsilane, Alkoxysilane, Wasser und das unpolare Lösemittel werden vorzugsweise so zum Reaktionsgemisch zudosiert und Reaktionsgemisch so kontinuierlich abgeführt, dass sich sehr kurze Verweilzeiten von 1 Minute bis 30 Minuten, vorzugsweise 2 Minuten bis 15 Minuten einstellen.

Vorzugsweise weisen die Organopolysiloxane mit einem OH-Gehalt von 3,0 - 10,0 Gew.-% die allgemeine Formel I

RₙSi0₄₋ₙ (I),

auf, in der
- **R**: OH, C₁-C₁₈-Kohlenwasserstoffrest oder C₁-C₆-Alkoxyrest und
- **n**: die Werte 0, 1, 2 oder 3 bedeuten und
- **n**: durchschnittliche Werte von 1,0 bis 2,0 aufweist.

Der OH-Gehalt der Organopolysiloxane bezieht sich auf die direkt an Siliciumatome angebundenen OH-Gruppen. Er beträgt vorzugsweise 3,0 - 8,0 Gew.-%.

Vorzugsweise weist **n** die durchschnittlichen Werte von 1,4 bis 1,8 auf.

Vorzugsweise weisen die Organopolysiloxane mit einem OH-Gehalt von 3,0 - 10,0 Gew.-% ein mittleres Molekulargewicht Mw von 1500 bis 3000, besonders bevorzugt von 1800 bis 3000, insbesondere von 2000 bis 2900 auf. Vorzugsweise weisen die Organopolysiloxane eine Tg (Glasübergangstemperatur) von 30°C bis 80°C insbesondere von 35°C bis 75°C auf.

Vorzugsweise weisen die Halogensilane die allgemeine Formel II

R¹ₘSiCl₄₋ₘ (II),

auf, in der
- **R¹**: C₁-C₁₈-Kohlenwasserstoffrest und
- **m**: die Werte 0, 1, 2 oder 3 bedeuten.

Vorzugsweise weisen die Alkoxysilane die allgemeine Formel III

R²_{O}SiR³_{4-O} (III),

auf, in der
- **R²**: C₁-C₁₈-Kohlenwasserstoffrest,
- **R³**: C₁-C₆-Alkoxyrest und
- **o**: die Werte 0, 1, 2 oder 3 bedeuten.

Die C₁-C₁₈-Kohlenwasserstoffreste **R**, **R¹** und **R²** sind vorzugsweise C₁-C₆-Alkylreste, insbesondere Methyl-, Ethyl-oder Propylreste oder Phenylreste.

Bevorzugte Bedeutungen für **R** entsprechen den bevorzugten Bedeutungen von **R¹** und **R²**.

Die C₁-C₆- Alkoxyreste **R³** werden vorzugsweise ausgewählt aus Methoxy-und Ethoxyresten.

Die Reaktionstemperatur beträgt vorzugsweise 20°C bis 100°C, besonders bevorzugt 40°C bis 80°C, insbesondere 50°C bis 70°C.

Der Reaktionsdruck beträgt vorzugsweise 0,05 MPa bis 1 MPa, besonders bevorzugt 0,08 MPa bis 0,2 MPa.

Die Reaktionszeit beträgt vorzugsweise 1 min bis 5 h, besonders bevorzugt 3 min bis 3 h, insbesondere 5 min bis 1,5 h.

Alle vorstehenden Symbole der vorstehenden Formeln weisen ihre Bedeutungen jeweils unabhängig voneinander auf. In allen Formeln ist das Siliciumatom vierwertig.

### Messmethoden für relevante Produktparameter

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern und der ²⁹Si-Kern vermessen wird.

### Beschreibung 1H-NMR Messung

Solvent: CDCl₃, 99,8 Gew.-% d
Probenkonzentration: ca. 50 mg / 1 ml CDCl₃ in 5 mm NMR-Röhrchen
Messung ohne Zugabe von TMS, Spektrenreferenzierung von Rest-CHCl₃ in CDCl₃ auf 7,24 ppm
Spektrometer: Bruker Avance I 500 oder Bruker Avance HD 500
Probenkopf: 5 mm BBO-Probenkopf oder SMART-Probenkopf (Fa. Bruker)

### Meßparameter:

Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

### Processing-Parameter:

SI = 32k
WDW = EM
LB = 0,3 Hz

Je nach verwendetem Spektrometertyp sind eventuell individuelle Anpassungen der Messparameter erforderlich.

### Beschreibung ²⁹Si-NMR Messung

Solvent: C₆D₆ 99,8 Gew.-% d/CCl4 1:1 v/v mit 1 Gew.-% Cr(acac)3 als Relaxationsreagenz
Probenkonzentration: ca. 2 g / 1,5 ml Solvent in 10 mm NMR-Röhrchen
Spektrometer: Bruker Avance 300
Probenkopf: 10 mm 1H/13C/15N/29Si glasfreier QNP-Probenkopf (Fa. Bruker)

### Messparameter:

Pulprog = zgig60
TD = 64k
NS = 1024 (abhängig von der Empfindlichkeit des Probenkopfes)
SW = 200 ppm
AQ = 2,75 s
D1 = 4 s
SFO1 = 300, 13 MHz
O1 = -50 ppm

### Processing-Parameter:

SI = 64k
WDW = EM
LB = 0,3 Hz

Je nach verwendetem Spektrometertyp sind eventuell individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechungsindexdetektor (RI-Detektor). Wo nicht anders ausgewiesen wird THF als Eluent verwendet und DIN 55672-1 angewendet. Die Polydispersität PD ist der Quotient Mw/Mn.

Der OH-Gehalt der Organopolysiloxane wird nach Zerewitinoff bestimmt.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

Beispiele 1 und 2 werden analog DE102013212980 und Beispiele 3 und 4 nach erfindungsgemäßem Verfahren jeweils in einem 300 Liter Loop (Stahl/Emaille) mit nachgeschalteter kontinuierlicher Phasentrennung hergestellt. Die so erhaltene Rohware wird bei allen Beispielen destillativ vom Lösemittel befreit.

### Herstellbeschreibung für nicht erfindungsgemäße Beispiele 1 und 2 analog DE 102013212980

### Beispiel 1

22kg/h Dimethyldichlorsilan, 335,2kg/h Phenyltrichlorsilan und 204,8kg/h Methyltriethoxysilan werden zusammen mit 1400kg/h Wasser sowie 900 kg/h Toluol parallel über eine Mischstrecke in einen Loop geführt. Folgende Prozessparameter stellen sich ein: Verweilzeit Minuten: 5-10
Reaktionstemperatur °C: 60-65
HCl-Konzentration in Wasserphase: 10-15 Gew.-%
Festgehalt (=Harz in Toluol gelöst): 25-30 Gew.-%

### Beispiel 2

22kg/h Dimethyldichlorsilan, 335,2kg/h Phenyltrichlorsilan und 210kg/h Methyltriethoxysilan werden zusammen mit 1400kg/h Wasser sowie 900 kg/h Toluol parallel über eine Mischstrecke in einen Loop geführt. Folgende Prozessparameter stellen sich ein: Verweilzeit Minuten: 5-10
Reaktionstemperatur °C: 60-65
HCl-Konzentration in Wasserphase: 10-15 Gew.-%
Festgehalt (=Harz in Toluol gelöst): 25-30 Gew.-%

In Tabelle 1 sind die Molekulargewichte aufgeführt:

**Tabelle 1:**

| Beispiel | Mw | Mn | PD | Chlorsilan Gew% | Alkoxysilan Gew% |
|---|---|---|---|---|---|
| 1 | 8100 | 2000 | 4,07 | 64 | 36 |
| 2 | 7700 | 2000 | 3,86 | 63 | 37 |

### Herstellbeschreibung für Beispiel 3 und 4 nach erfindungsgemäßen Verfahren

### Beispiel 3

22 kg/h Dimethyldichlorsilan, 167,6 kg/h Phenyltrichlorsilan 167,6 kg/h Phenyltriethoxysilan und 230 kg/h Methyltriethoxysilan werden zusammen mit 800 kg/h Wasser sowie 850 kg/h Toluol parallel über eine Mischstrecke in einen Loop geführt.
Folgende Prozessparameter stellen sich ein:
Verweilzeit Minuten: 5-10
Reaktionstemperatur °C: 60-65
HCl-Konzentration in Wasserphase: 10-15 Gew.-%

### Beispiel 4

22 kg/h Dimethyldichlorsilan, 167,6 kg/h Phenyltrichlorsilan 167,6 kg/h Phenyltriethoxysilan und 204,8 kg/h Methyltriethoxysilan werden zusammen mit 800 kg/h Wasser sowie 850 kg/h Toluol parallel über eine Mischstrecke in einen Loop geführt.
Folgende Prozessparameter stellen sich ein:
Verweilzeit Minuten: 5-10
Reaktionstemperatur °C: 60-65
HCl-Konzentration in Wasserphase: 10-15 Gew.-%
   Festgehalt (=Harz in Toluol gelöst): 25-30 Gew.-%

In Tabelle 2 sind die Molekulargewichte aufgeführt:

**Tabelle 2:**

| Beispiel | Mw | Mn | PD | Chlorsilan Gew% | Alkoxysilan Gew% |
|---|---|---|---|---|---|
| 3 | 2300 | 1300 | 1,86 | 32 | 68 |
| 4 | 2100 | 1200 | 1,72 | 34 | 66 |

## Patentansprüche

1. Kontinuierliches Verfahren zur Herstellung von Organopolysiloxanen mit einem OH-Gehalt von 3,0 - 10,0 Gew.-%,
bei dem Alkoxysilane in einem Gewichtsanteil von mindestens 60% und Chlorsilane in einem Gewichtsanteil von höchstens 40% bezogen auf die Summe aus Chlorsilanen und Alkoxysilanen, Wasser und unpolares nicht mehr als 1 g in 1 l Wasser bei 20°C und 1 bar lösliches Lösemittel kontinuierlich zum Reaktionsgemisch zudosiert werden und das Reaktionsgemisch kontinuierlich abgeführt wird.

2. Verfahren nach Anspruch 1, bei dem die Alkoxysilane, Chlorsilane, Wasser und das unpolare Lösemittel kontinuierlich in einen Loopreaktor zum Reaktionsgemisch zudosiert werden und das Reaktionsgemisch aus dem Loopreaktor kontinuierlich abgeführt wird.

3. Verfahren nach einem oder mehreren der vorangehenden Ansprüche, bei dem das Wasser in solchen Mengen zudosiert wird, dass sich die HCl-Konzentration in der Wasserphase von 5 - 35 Gew.-% einstellt.

4. Verfahren nach einem oder mehreren der vorangehenden Ansprüche, bei dem das unpolare Lösemittel ausgewählt wird aus Kohlenwasserstoffen.

5. Verfahren nach einem oder mehreren der vorangehenden Ansprüche, bei dem das unpolare Lösemittel dem Reaktionsgemisch solchen Mengen zugeführt wird, dass sich Festgehalte von 25-45 Gew.-% einstellen, wobei der Festgehalt die Menge an gebildeten Organopolysiloxanen ist, die in der Lösemittelphase gelöst sind.

6. Verfahren nach einem oder mehreren der vorangehenden Ansprüche, bei dem das in der Lösemittelphase gelöste Organopolysiloxan kontinuierlich von der Wasserphase getrennt wird.

7. Verfahren nach einem oder mehreren der vorangehenden Ansprüche, bei dem die Organopolysiloxane die allgemeine Formel I
RₙSi0₄₋ₙ (I),
aufweisen, in der
**R** OH, C₁-C₁₈-Kohlenwasserstoffrest oder C₁-C₆-Alkoxyrest und
**n** die Werte 0, 1, 2 oder 3 bedeuten und
**n** durchschnittliche Werte von 1,0 bis 2,0 aufweist.

## Claims

1. Continuous process for producing organopolysiloxanes having an OH content of 3.0 - 10.0% by weight,
in which alkoxysilanes in a proportion by weight of at least 60% and chlorosilanes in a proportion by weight of at most 40%, based on the sum total of chlorosilanes and alkoxysilanes, water and non-polar solvent, soluble to an extent of not more than 1 g in 1 1 of water at 20°C and 1 bar, are metered in continuously to the reaction mixture and the reaction mixture is continuously discharged.

2. Process according to Claim 1, in which the alkoxysilanes, chlorosilanes, water and the non-polar solvent are metered in continuously to the reaction mixture in a loop reactor and the reaction mixture is discharged continuously from the loop reactor.

3. Process according to one or more of the preceding claims, in which the water is metered in in amounts such that the HCl concentration in the water phase of 5 - 35% by weight is established.

4. Process according to one or more of the preceding claims, in which the non-polar solvent is selected from hydrocarbons.

5. Process according to one or more of the preceding claims, in which the non-polar solvent is fed to the reaction mixture in amounts such that a solids content of 25-45% by weight is established, wherein the solids content is the amount of organopolysiloxanes formed which is dissolved in the solvent phase.

6. Process according to one or more of the preceding claims, in which the organopolysiloxane dissolved in the solvent phase is separated continuously from the water phase.

7. Process according to one or more of the preceding claims, in which the organopolysiloxanes have the general formula I
RₙSi0₄₋ₙ (I),
in which
**R** signifies OH, C₁-C₁₈-hydrocarbon radical or C₁-C₆-alkoxy radical and
**n** signifies the values 0, 1, 2 or 3 and
**n** has average values from 1.0 to 2.0.

## Revendications

1. Procédé en continu pour la préparation d'organopolysiloxanes comportant une teneur en OH de 3,0 à 10,0 % en poids,
dans lequel des alcoxysilanes en une proportion en poids d'au moins 60 % et des chlorosilanes en une proportion en poids d'au plus 40 % par rapport à la somme des chlorosilanes et des alcoxysilanes, de l'eau et un solvant non polaire soluble à raison de pas plus d'1 g dans un 1 l d'eau à 20 °C et 1 bar, sont ajoutés progressivement en continu au mélange réactionnel et le mélange réactionnel est évacué en continu.

2. Procédé selon la revendication 1, dans lequel les alcoxysilanes, les chlorosilanes, l'eau et le solvant non polaire sont ajoutés progressivement au mélange réactionnel dans un réacteur à boucle continue et le mélange réactionnel est évacué en continu du réacteur à boucle.

3. Procédé selon l'une ou plusieurs des revendications précédentes, dans lequel l'eau est ajoutée progressivement en de telles quantités, que la concentration en HCl dans la phase aqueuse est ajustée de 5 à 35 % en poids.

4. Procédé selon l'une ou plusieurs des revendications précédentes, dans lequel le solvant non polaire est choisi parmi des hydrocarbures.

5. Procédé selon l'une ou plusieurs des revendications précédentes, dans lequel le solvant non polaire est introduit dans le mélange réactionnel en de telles quantités que les teneurs en solides sont ajustées de 25 à 45 % poids, la teneur en solides étant la quantité d'organopolysiloxanes formés, qui sont dissous dans la phase du solvant.

6. Procédé selon l'une ou plusieurs des revendications précédentes, dans lequel l'organopolysiloxane dissous dans la phase du solvant est séparé en continu de la phase aqueuse.

7. Procédé selon l'une ou plusieurs des revendications précédentes, dans lequel les organopolysiloxanes présentent la formule générale I
RₙSi0₄₋ₙ (I) ,
dans laquelle
R signifie OH, radical hydrocarboné en C₁₋₁₈ ou radical C₁₋₆-alcoxy et
n signifie les valeurs 0, 1, 2 ou 3 et
n présente des valeurs moyennes de 1,0 à 2,0.
